# EUROPEAN PATENT SPECIFICATION

(11) **EP 1 191 618 B1**
(45) Date of publication and mention of the grant of the patent: **31.03.2010**
(21) Application number: 00915442.8
(22) Date of filing: 07.04.2000
(51) Int. Cl.: H01M 4/02, H01M 10/052, H01M 2/16

(54) **RECHARGEABLE BATTERY USING NONAQUEOUS ELECTROLYTE**
WIEDERAUFLADBARE BATTERIE MIT NICHT-WÄSSRIGEM ELEKTROLYTEN
BATTERIE RECHARGEABLE AVEC ELECTROLYTE NON AQUEUSE

(30) Priority: 08.04.1999 JP 10074999
(43) Date of publication of application: 27.03.2002
(73) Proprietor: Panasonic Corporation, Kadoma-shi Osaka 571-8501 (JP)
(72) Inventor: KIMURA, Kenji, Matsushita Electric Ind. Co., Ltd., Kadoma-shi, Osaka 571-8501 (JP); OMORI, Keisuke, Matsushita Electric Ind. Co., Ltd., Kadoma-shi, Osaka 571-8501 (JP); UEMOTO, Seiichi, Matsushita Electric Ind. Co., Ltd, Kadoma-shi, Osaka 571-8501 (JP)
(74) Representative: Haley, Stephen
(86) International application number: PCT/JP2000/002303
(87) International publication number: WO 2000/062358

(56) References cited:
- EP-A1- 0 741 426
- EP-A1- 0 845 824
- JP-A- 2 132 757
- JP-A- 2 304 864
- JP-A- 7 105 938
- JP-A- 7 183 027
- JP-A- 8 115 743
- JP-A- 60 009 066
- JP-A- 61 208 759
- JP-A- 63 098 958
- JP-A- 63 098 958

## Description

### TECHNICAL FIELD

The present invention relates to a nonaqueous electrolyte rechargeable battery.

### BACKGROUND ART

Recent progress in miniaturization and weight reduction of electronic equipment has brought about increasing demands for miniaturization, weight reduction and increased capacity of the batteries which are used as their power sources.

To meet these demands, a nonaqueous electrolyte rechargeable battery of high energy density which employs metallic lithium or lithium alloy as the negative electrode active material has attracted attention. However, batteries which employ metallic lithium or lithium alloy as the negative electrode active material have problems that hinder them from being put into practical use such as deterioration of the cycle characteristic or internal short-circuiting due to dendritic precipitation of the lithium on the negative electrode produced as charging proceeds.

Accordingly, nonaqueous electrolyte rechargeable batteries employing a carbon-based material as the negative electrode active material and a transition metal oxide containing lithium, such as LiCoO₂, as the positive electrode active material have been put into practice by various companies. Such nonaqueous electrolyte rechargeable batteries have excellent cycle characteristics, since they are free from the problem of precipitation of the lithium on the negative electrode. Development of such nonaqueous electrolyte rechargeable batteries is therefore being vigorously pursued and their incorporation into electronic equipment continues apace.

Development of nonaqueous electrolyte rechargeable batteries is also being pursued in keeping with concern over the global environment or energy problems. A technique for load equalization is desired in order to secure stable power supply while maintaining a good global environment:
considerable load equalization would be effected if use of small-scale battery power storage devices capable of storing power during the night could be made common in ordinary households etc. In order to prevent atmospheric pollution caused by car exhaust gases and global warming due to CO₂, it would also be desirable to extend the use of electric vehicles in which some or all of the motive power is obtained by rechargeable batteries. Large nonaqueous electrolyte rechargeable batteries with a cell capacity of about 100 Ah are therefore being developed for use as battery power storage devices for domestic use and as power sources for electric vehicles.

However, in the above described nonaqueous electrolyte rechargeable batteries, poor wetting property of the electrolyte towards positive electrode material hinders uniform mobility of lithium ions, resulting in considerable polarization at the positive electrode. The nonaqueous electrolyte rechargeable batteries thus fail to achieve excellent charging/discharging characteristic, and furthermore they require a long time for pouring in the electrolyte due to the poor wetting property of the electrolyte, resulting in poor productivity.

Corona discharge treatment is a well-known technique for improving the wetting property of the separator towards the electrolyte. In addition, Laid-open Japanese Patent Application No. H7-183027 discloses performing corona discharge treatment in order to improve the wetting property of the carbon-based material of the negative electrode plate towards the electrolyte.

In the light of the above problems of the prior art, an object of the present invention is to provide a nonaqueous electrolyte rechargeable battery in which charging/discharging characteristic is improved by improving wetting property of the positive electrode material towards the electrolyte, and the productivity is improved by shortening the time required for pouring in the electrolyte.

More information on the prior art can be found in JP 63 098958, which discloses a low temperature plasma treatment for conductive polymer electrodes suitable for a battery and JP 02 132757, which discusses enhancing the discharge performance of a battery under heavy-loaded conditions.

In a nonaqueous electrolyte rechargeable battery according to the present invention there is provided a nonaqueous electrolyte rechargeable battery comprising:
an electrode group including a positive electrode plate and a negative electrode plate, the positive and negative electrode plates being superimposed and wound with a separator interposed therebetween;
an electrolyte; and
a battery case for accommodating the electrode group and the electrolyte,
the battery being characterised by:
   the positive electrode plate including a positive electrode material containing a positive electrode active material that includes a transition metal oxide containing lithium and a binder comprising a fluorinated resin of poly vinylidene fluoride,
wherein corona discharge treatment is performed on one of the positive electrode material or the positive electrode plate.

The charging/discharging characteristics of the battery is improved since the lithium ions are permitted to easily reach the surface of the positive electrode material, due to increased affinity between the positive electrode material of the positive electrode plate and the electrolyte by the corona discharge treatment. The corona discharge treatment is more effective in a battery in which the packing density of the positive electrode material is raised in order to raise the battery capacity per unit volume, since this would otherwise result in lowering of the wetting property of the positive electrode material towards the electrolyte.

It should be noted that, as in the prior art described above, wetting property of the separator of the negative electrode plate towards the electrolyte is raised by performing corona discharge treatment on the separator or the negative electrode plate. However, improved charging/discharging characteristic obtained by improving wetting property of the positive electrode plate towards the electrolyte by corona discharge treatment is remarkable since polarization at the positive electrode is much more severe than that at the negative electrode particularly in high-rate charging/discharging. Considerably increased productivity is also achieved by shortening the pouring time by performing corona discharge treatment to improve the wetting property of the positive electrode material towards the electrolyte, since it has smaller particles than the negative electrode material in layer form.

Preferably, corona discharge treatment is also performed on the negative electrode material or the negative electrode plate manufactured therefrom, and on the separator as well. Their improved wetting property towards the electrolyte leads to improved wetting property of the entire electrode plate group, with the result that a further reduction in pouring time of the electrolyte is achieved in the case not only of comparatively small rechargeable batteries of about 600 mAh but also in particular of nonaqueous electrolyte rechargeable batteries of about a few tens to a few hundreds of Ah, since the area of their electrode plates increases as the battery size is made larger. Productivity of batteries is thus raised.

### BRIEF DESCRIPTION OF THE DRAWINGS

Figure 1 is a longitudinal cross-sectional view of a nonaqueous electrolyte rechargeable battery according to an embodiment of the present invention;
Figure 2 is a detailed cross-sectional view of a positive electrode plate, a negative electrode plate, and a separator in the battery;
Figure 3 is a diagram schematically illustrating the positive electrode material, the negative electrode material, and the movement of lithium ions during charging/discharging;
Figure 4 is a plan view showing how corona discharge treatment is performed; and
Figure 5 is a longitudinal cross-sectional view of a nonaqueous electrolyte rechargeable battery according to another embodiment of the present invention.

### BEST MODE FOR CARRYING OUT THE INVENTION

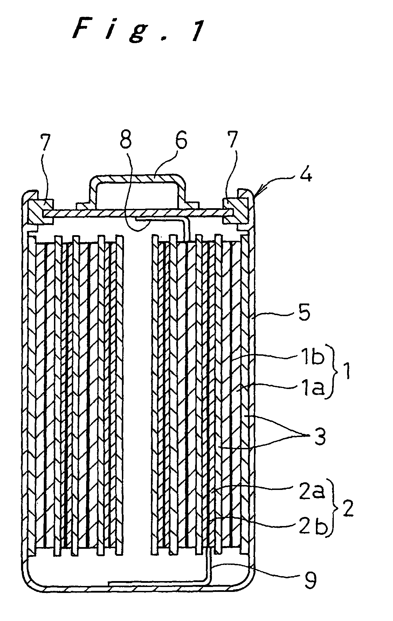

A nonaqueous electrolyte rechargeable battery according to an embodiment of the present invention will be described with reference to Figure 1 to Figure 4.

In Figure 1, numeral 1 represents a positive electrode plate and numeral 2 represents a negative electrode plate. An electrode group is formed by overlaying them with a separator 3 made of microporous polyethylene film interposed between them, and winding them in a spiral fashion. The electrode group is accommodated in a battery case 4 together with the electrolyte. The battery case 4 includes a cylindrical battery can 5 constituting a negative electrode terminal and a battery closure 6 constituting a positive electrode terminal. An insulating packing 7 is interposed between the inner circumference of the top aperture of the battery can 5 and the outer circumference of the battery closure 6, whereby mutual insulation is effected therebetween and the battery case 4 is sealed. The separator 3 is interposed also between the electrode group and the inner circumference of the battery can 5.

The positive electrode plate 1 is constituted by coating both surfaces of a positive electrode current collector 1b with a positive electrode material 1a; a side part (in the example illustrated, the top part) of this positive electrode current collector 1b projects from the portion that is coated with the positive electrode material 1a. The negative electrode plate 2 is constituted by coating both surfaces of a negative electrode current collector 2b with a negative electrode material 2a; a side part opposite from the projected portion of the positive electrode current collector 1b (in the example illustrated, the bottom part) of this negative electrode current collector 2b projects from the portion that is coated with the negative electrode material 2a. The separator 3 projects to the outside beyond both side edges of the coated portions of the positive electrode plate 1 and the negative electrode plate 2. A positive electrode current collecting plate 8 is joined to the positive electrode current collector 1b and a negative electrode current collecting plate 9 is joined to the negative electrode current collector 2b. The positive electrode current collecting plate 8 and the negative electrode current collecting plate 9 are respectively connected to the battery closure 6 and the battery can 5.

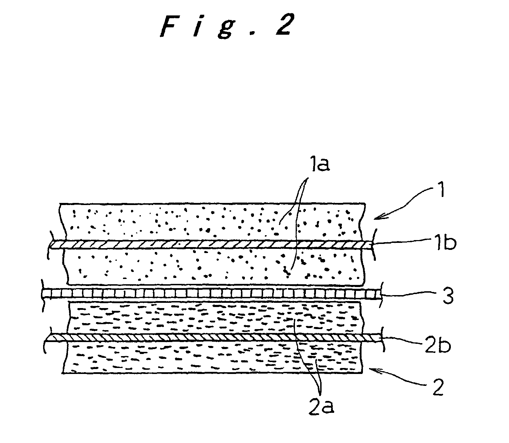

A detailed description of the positive electrode plate 1 and the negative electrode plate 2 will now be given with reference to Figure 2. The positive electrode current collector 1b is made of aluminum foil or the like. The positive electrode plate 1 is constituted by coating both surfaces of the positive electrode current collector 1b with a positive electrode material 1a containing a positive electrode active material and a binder. For the positive electrode active material, LiCoO₂, LiMn₂O₄, LiNiO₂, any other lithium oxide in which one of Co, Mn or Ni is substituted with another transition metal, or a lithium-containing transition metal oxide other than these, may be used. In particular, Mn-based lithium-containing transition metal oxides such as the globally abundant low-cost LiMn₂O₄ are suitable.

The negative electrode current collector 2b is made of copper foil or the like and the negative electrode plate 2 is constituted by coating both surfaces of the negative electrode current collector 2b with a negative electrode material 2a containing a negative electrode active material and a binder. For the negative electrode active material, carbon-based materials such as graphite, petroleum coke, carbon fiber, or organic polymer sintered products, or metals or oxides, or composite materials of these capable of occluding and releasing lithium, may be used.

The electrolyte may be obtained by dissolving a lithium salt such as lithium hexafluorophosphate (LiPF₆), lithium perchlorate (LiClO₄), or lithium fluoroborate (LiBF₄) into a nonaqueous solvent such as ethylene carbonate (EC), propylene carbonate (PC), diethylene carbonate (DEC) or ethylene methyl carbonate (EMC), either alone or in combination, at a concentration of 0.5 mol/dm³ to 2 mol/dm³. A polyolefin-based microporous film may be employed as the separator.

To give a specific example, electrolyzed manganese dioxide (EMD: MnO₂) and lithium carbonate (Li₂CO₃) were mixed at a ratio Li/Mn= 1/2 and sintered in the atmosphere of 800°C for 20 hours, whereby LiMn₂O₄ was produced as the positive electrode active material. The positive electrode material 1a was then obtained by mixing, by weight, 92% LiMn₂O₄, 3% acetylene black serving as conducting agent, and 5% poly vinylidene fluoride as binder. In order to knead the positive electrode material 1a into the form of a paste, the poly vinylidene fluoride serving as the binder was employed in the form of N-methylpyrrolidone dispersion. The mixing ratios given above are ratios in terms of the solid fractions. Both faces of the positive electrode current collector 1b made of 20 µm thick aluminum foil were coated with this positive electrode material paste such that positive electrode material layers were formed except a region of width 10 mm on one side edge, which was left uncoated. The film thickness of both positive electrode material layers was the same and the sum of the two film thicknesses after coating and drying was 280 pm, giving a positive electrode plate thickness of 300 µm. After this, the positive electrode plate 1 was compressed using a press roll of diameter 300 mm, to reduce the thickness of the positive electrode plate 1 to 200 µm. The density of the positive electrode material was then 3.0 g/cm³.

For the negative electrode material 2a, a mixture of artificial graphite and styrene butadiene rubber (SBR) as a binder in a weight ratio of 97:3 was employed. In order to knead the negative electrode material 2a into the form of a paste, the styrene butadiene rubber binder was employed in the form of an aqueous dispersion. The above mixing ratios are expressed as solid fractions. Both faces of the negative electrode current collector 2b made of 14µm thick copper foil were coated with this negative electrode material paste such that negative electrode material layers were formed except a region of width 10 mm on one side edge, which was left uncoated. After this, the negative electrode plate 2 was compressed using a press roll of diameter 300 mm, to reduce the thickness of the negative electrode plate 2 to 170 µm. The density of the negative electrode material was then 1.4 g/cm³.

The electrolyte was obtained by dissolving lithium hexafluorophosphate (LiPF₆) as solute in a concentration of 1 mol/dm³ in a solvent obtained by mixing ethylene carbonate (EC) and diethylene carbonate (DEC) in a volume blending ratio of 1:1.

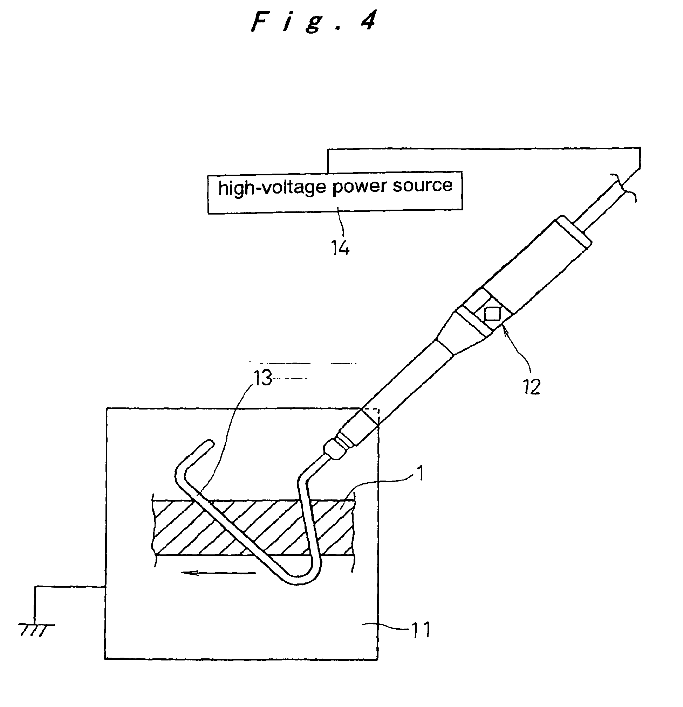

Corona discharge treatment was performed on the positive electrode material 1a after or before manufacturing the positive electrode plate 1. In performing corona discharge treatment, as shown in Figure 4, the positive electrode plate 1 is arranged on an earthed electrode plate 11 and an electrode 13 of a high-voltage probe 12 is positioned with a separation of about 1 to 2 mm thereabove. Corona discharge treatment is performed by moving the positive electrode plate 1 at a speed of about 1 m/min while generating corona discharge by applying voltage of 6000 V to 10000 V, preferably about 8000 V to the high-voltage probe 12, by a high-voltage power source 14. In this way, polar groups are produced over the entire surface of the positive electrode material 1a, thereby improving wetting property of the positive electrode material 1a towards the electrolyte.

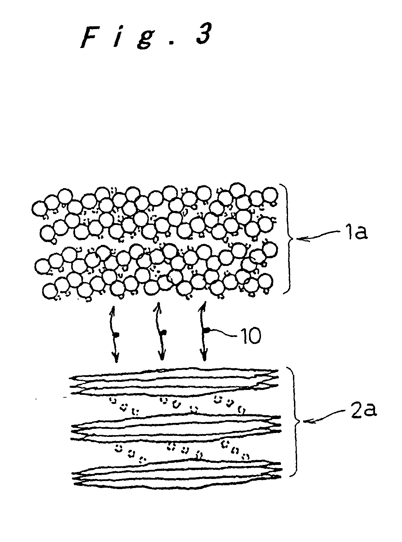

In a nonaqueous electrolyte rechargeable battery manufactured as above, the affinity between the positive electrode material 1a of the positive electrode plate 1 and the electrolyte is increased by the corona discharge treatment, enabling the lithium ions to easily reach the surface of the positive electrode material 1a, thereby improving charging/discharging characteristic. If corona discharge treatment is also performed on the negative electrode plate 2 or the separator 3, an improvement in charging/discharging characteristic is obtained as well, due to improved wetting property towards the electrolyte, but the improvement in charging/discharging characteristic achieved by performing corona discharge treatment on the positive electrode 1 is remarkable. This is because that, the lithium ions 10 are remarkably facilitated to reach the surface of the positive electrode material 1a by performing the corona discharge treatment since in general, as shown in Figure 3, the lithium ions 10 have difficulty in reaching the entire surface of the positive electrode material 1a because the particles thereof are smaller than those of the negative electrode material 2a in layer form. Corona discharge treatment is more effective for a battery in which the packing density of the positive electrode material 1a is increased in order to increase the battery capacity per unit volume, since wetting property of the positive electrode material 1a towards the electrolyte would otherwise be lowered.

The required time for pouring in the electrolyte is considerably shortened due to the improvement in wetting property of the positive electrode material 1a, whose particles are smaller than those of the negative electrode material 2a in layer form. The productivity of batteries is thus considerably increased.

If corona discharge treatment is also performed on the negative electrode material 2a or on the manufactured negative electrode plate 2, or on the separator 3, their wetting property towards the electrolyte is improved, thereby improving wetting property of the rechargeable battery as a whole. The productivity of batteries is further increased due to shortening of the pouring time of the electrolyte.

Thereafter Examples of the present invention and Comparative Examples will be described. A battery for use in Examples and Comparative Examples is a cylindrical rechargeable battery of AAA-size, providing a battery capacity of 600 mAh. In Examples of the invention, corona discharge treatment is performed on the positive electrode plate 1 at voltage of 8000 V and with a speed of 1 m/min, and in Comparative Examples, corona discharge treatment is not performed.

| | |
|---|---|
| Example 1 | Corona discharge treatment is performed on the positive electrode plate 1 after manufacture |
| Example 2 | Corona discharge treatment is performed on the positive electrode material 1a |
| Example 3 | Corona discharge treatment is performed on the positive electrode plate 1, the negative electrode plate 2, and the separator 3 |
| Comparative example 1 | No corona discharge treatment is performed |
| Comparative example 2 | Corona discharge treatment is performed on the negative electrode plate 2 |
| Comparative example 3 | Corona discharge treatment is performed on the separator 3 |

The pouring time of the electrolyte in the manufacturing process and the discharge capacity at 1 C were measured for each of the above batteries. The values are shown below in reference to values of the comparative example 1, the values being shown as 100.

| | Pouring time | Discharge capacity |
|---|---|---|
| Example 1 | 50 | 120 |
| Example 2 | 50 | 120 |
| Example 3 | 30 | 125 |
| Comparative example 1 | 100 | 100 |
| Comparative example 2 | 65 | 103 |
| Comparative example 3 | 60 | 105 |

As is clear from the results, performing corona discharge treatment on the positive electrode plate 1 or its positive electrode material 1a halved the pouring time of the electrolyte and increased the discharge capacity by 20% compared with the case where this was not performed.

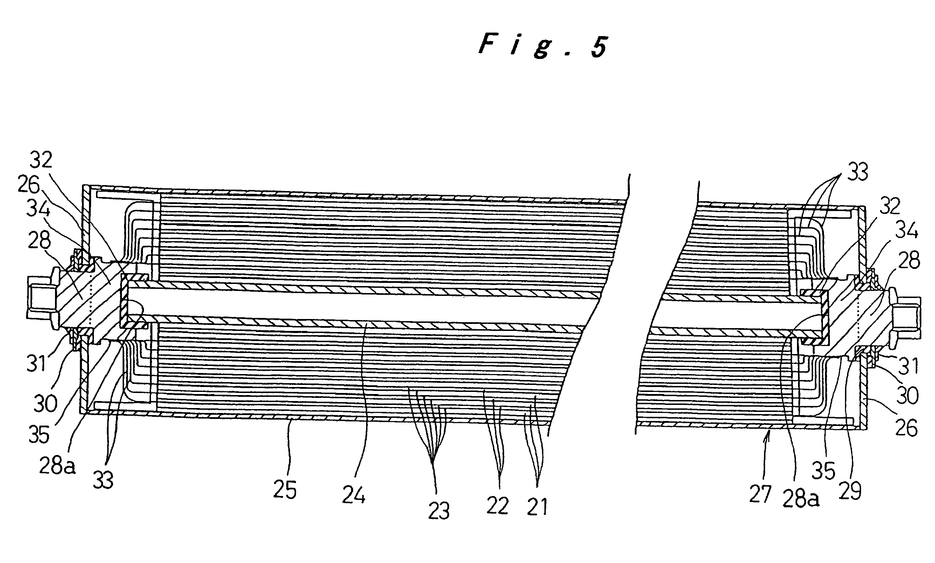

In the above embodiment, the examples are illustrated employing a comparatively small rechargeable battery such as a rechargeable battery of AAA size, providing a battery capacity of 600 mAh, it is also suitable to apply the present invention to a large rechargeable battery providing a battery capacity of 100 Ah, as shown in Figure 5.

In Figure 5, numeral 21 represents a positive electrode plate, and numeral 22 represents a negative electrode plate; these are overlaid with a separator 23 made of microporous polyethylene film interposed between them, and are wound in a spiral fashion around a cylindrical core 24 made of aluminum pipe. They are accommodated in an outer tube 25 made of stainless steel pipe together with an electrolyte. A cylindrical case 27 is constituted by sealing both ends of the outer tube 25 by laser welding of sealing plates 26 made of stainless steel. An electrode pillar 28 constituting a positive electrode terminal or a negative electrode terminal is mounted by penetrating through the middle of the sealing plates 26, 26, through a respective insulator 29. Numeral 30 represents a metal washer arranged on the outside face of the insulator 29 and numeral 31 represents a clamping ring whereby the electrode pillar 28 is fixed to the sealing plate 26. Both ends of the cylindrical core 24 are supported by the cylindrical case 27 through the electrode pillar 28 by fitting and fixing into a recess 28a formed on the inside end of the electrode pillar 28 in the axial direction through a insulating cap 32.

Leads 33 extend from a side edge of the positive electrode plate 21 and the other side edge of the negative electrode plate 22, at intervals. These leads 33 are arranged so as to be positioned at two locations in the radial direction in a condition in which the positive electrode plate 21 and the negative electrode plate 22 are wound around the cylindrical core 24. These leads 33 are ultrasonically joined to a lead joining surface 35 formed at the outer circumference of a connecting shaft 34 of the electrode pillar 28 within the cylindrical case 27, respectively.

In the rechargeable battery of this embodiment, the same benefits are obtained by performing corona discharge treatment of at least the positive electrode plate 21 in the same way as in the embodiment described above. If corona discharge treatment is performed on all of the positive electrode plate 21, the negative electrode plate 22 and the separator 23, the pouring time of the electrolyte is reduced to 24 hours, compared with 72 hours required if corona discharge treatment is not performed. Although hereinabove all the embodiments described related to a cylindrical nonaqueous electrolyte rechargeable battery, the same beneficial effect is also obtained for a battery having a shape other than cylindrical.

### INDUSTRIAL APPLICABILITY

According to the present invention, the nonaqueous electrolyte rechargeable battery achieves excellent charging/discharging characteristic, since performing of corona discharge treatment on the positive electrode material or the manufactured positive electrode plate increases affinity between the positive electrode material of the positive electrode plate and the electrolyte, facilitates the lithium ions to move uniformly. Corona discharge treatment is more beneficial in a battery in which the packing density of the positive electrode material is raised in order to achieve higher battery capacity per unit volume. The invention is useful in producing rechargeable batteries of excellent charging/discharging characteristic with high productivity, since the pouring time of the electrolyte is considerably shortened due to the improved wetting property of the positive electrode material towards the electrolyte.

## Claims

1. A nonaqueous electrolyte rechargeable battery comprising:
an electrode group including a positive electrode plate (1,21) and a negative electrode plate (2, 22), the positive and negative electrode plates being superimposed and wound with a separator (3, 23) interposed therebetween;
an electrolyte; and
a battery case (4, 27) for accommodating the electrode group and the electrolyte
the battery being **characterised by**:
the positive electrode plate (1, 21) including a positive electrode material (1a) containing a positive electrode active material that includes a transition metal oxide containing lithium and a binder comprising a fluorinated resin of poly vinylidene fluoride,
wherein corona discharge treatment is performed on one of the positive electrode material (1 a) or the positive electrode plate (1, 21).

2. The nonaqueous electrolyte rechargeable battery according to claim 1, wherein the negative electrode plate (2, 22) includes a negative electrode material.

3. The nonaqueous electrolyte rechargeable battery according to claim 1 or 2, wherein corona discharge treatment is performed on one of the negative electrode material or the negative electrode plate (2, 22).

4. The nonaqueous electrolyte rechargeable battery according to claim 2 or 3, wherein corona discharge treatment is performed on the separator (3, 23).

5. The nonaqueous electrolyte rechargeable battery according to claim 1, wherein corona discharge treatment is performed on the positive electrode plate (1,21).

## Patentansprüche

1. Wiederaufladbare Batterie mit nicht-wässrigem Elektrolyten, mit:
einer Elektrodengruppe mit einer positiven Elektrodenplatte (1, 21) und einer negativen Elektrodenplatte (2, 22), wobei die positive und negative Elektrodenplatte gestapelt und mit einem zwischen ihnen angeordneten Separator (3, 23) aufgewickelt sind,
einem Elektrolyten und
einem Batteriegehäuse (4, 27) zum Aufnehmen der Elektrodengruppe und des Elektrolyten,
wobei die Batterie **dadurch gekennzeichnet ist, dass**
die positive Elektrodenplatte (1, 21) ein positives Elektrodenmaterial (1a) aufweist, das ein positives aktives Elektrodenmaterial enthält, das ein Übergangsmetalloxid mit Lithium und einen Binder mit einem fluorisierten Harz von Polyvinylidenfluorid aufweist,
wobei eine Koronaentladungsbehandlung an dem positiven Elektrodenmaterial (1a) oder der positiven Elektrodenplatte (1,21) durchgeführt wurde.

2. Wiederaufladbare Batterie mit nicht-wässrigem Elektrolyten nach Anspruch 1,
wobei die negative Elektrodenplatte (2, 22) ein negatives Elektrodenmaterial aufweist.

3. Wiederaufladbare Batterie mit nicht-wässrigem Elektrolyten nach Anspruch 1 oder 2,
wobei eine Koronaentladungsbehandlung an dem negativen Elektrodenmaterial oder der negativen Elektrodenplatte (2, 22) durchgeführt wurde.

4. Wiederaufladbare Batterie mit nicht-wässrigem Elektrolyten nach Anspruch 2 oder 3,
wobei eine Koronaentladungsbehandlung an dem Separator (3, 23) durchgeführt wurde.

5. Wiederaufladbare Batterie mit nicht-wässrigem Elektrolyten nach Anspruch 1,
wobei eine Koronaentladungsbehandlung an der positiven Elektrodenplatte (1, 21) durchgeführt wurde.

## Revendications

1. Batterie rechargeable à électrolyte non aqueux comprenant:
un groupe d'électrodes comportant une plaque (1, 21) d'électrodes positives et une plaque (2, 22) d'électrodes négatives, les plaques d'électrodes positives et négatives étant superposées et enroulées avec un séparateur (3, 23) interposé entre elles;
un électrolyte; et
un boîtier (4, 27) de batterie pour accueillir le groupe d'électrodes et l'électrolyte,
la batterie étant **caractérisée par le fait que**:
la plaque (1, 21) d'électrodes positives comportant un matériau (1a) d'électrodes positives contenant un matériau actif d'électrodes positives qui comporte un oxyde de métal de transition contenant du lithium et un liant comprenant une résine fluorée de polyfluorure de vinylidène,
où un traitement par décharge de corona est exécuté sur l'un du matériau (1a) d'électrodes positives ou la plaque (1, 21) d'électrodes positives.

2. Batterie rechargeable à électrolyte non aqueux selon la revendication 1, dans laquelle la plaque (2, 22) d'électrodes négatives comporte un matériau d'électrodes négatives.

3. Batterie rechargeable à électrolyte non aqueux selon la revendication 1 ou 2, dans laquelle un traitement par décharge de corona est exécuté sur l'un du matériau d'électrodes négatives ou la plaque (2, 22) d'électrodes négatives.

4. Batterie rechargeable à électrolyte non aqueux selon la revendication 2 ou 3, dans laquelle un traitement par décharge de corona est exécuté sur le séparateur (3, 23).

5. Batterie rechargeable à électrolyte non aqueux selon la revendication 1, dans laquelle un traitement par décharge de corona est exécuté sur la plaque (1, 21) d'électrodes positives.
